# EUROPÄISCHE PATENTSCHRIFT

(11) **EP 1 730 080 B1**
(45) Veröffentlichungstag und Bekanntmachung des Hinweises auf die Patenterteilung: **16.01.2008**
(21) Anmeldenummer: 05736207.1
(22) Anmeldetag: 24.03.2005
(51) Int. Cl.: C02F 1/461

(54) **ELEKTRODENANORDNUNG FÜR EINE ELEKTROCHEMISCHE BEHANDLUNG VON FLÜSSIGKEITEN MIT EINER GERINGEN LEITFÄHIGKEIT**
ELECTRODE ASSEMBLY FOR THE ELECTROCHEMICAL TREATMENT OF LIQUIDS WITH A LOW CONDUCTIVITY
SYSTEME D'ELECTRODES DESTINE AU TRAITEMENT ELECTROCHIMIQUE DE LIQUIDES PRESENTANT UNE FAIBLE CONDUCTIVITE

(30) Priorität: 26.03.2004 DE 102004015680
(43) Veröffentlichungstag der Anmeldung: 13.12.2006
(73) Patentinhaber: CONDIAS GMBH, 25524 Itzehoe (DE); G.E.R.U.S. GESELLSCHAFT FÜR ELEKTROCHEMISCHES RECYCLING UMWELT- UND, 12459 Berlin (DE)
(72) Erfinder: STADELMANN, Manuela, 10249 Berlin (DE); BLASCHKE, Manfred, 10407 Berlin (DE); WÜNSCHE, Maja, 15732 Eichwalde (DE); PETZER, Helmut, 16552 Schildow (DE); KRAFT, Alexander, 12557 Berlin (DE); MATTHEE, Thorsten, 25582 Hohenaspe (DE); FRYDA, Matthias, 25524 Itzehoe (DE)
(74) Vertreter: Lins, Edgar
(86) Internationale Anmeldenummer: PCT/DE2005/000556
(87) Internationale Veröffentlichungsnummer: WO 2005/095282

(56) Entgegenhaltungen:
- EP-A- 1 038 993
- WO-A-02/48431
- DE-U1- 20 318 754
- MILLET P ET AL: "Design and performance of a solid polymer electrolyte water electrolyzer" INTERNATIONAL JOURNAL OF HYDROGEN ENERGY, ELSEVIER SCIENCE PUBLISHERS B.V., BARKING, GB, Bd. 21, Nr. 2, Februar 1996 (1996-02), Seiten 87-93, XP004041042 ISSN: 0360-3199

## Beschreibung

Die Erfindung betrifft eine Elektrodenanordnung für eine elektrochemische Behandlung von Flüssigkeiten mit einer geringen Leitfähigkeit, mit Elektroden, zwischen denen ein polymerer Festelektrolyt angeordnet ist, die mittels einer Andruckeinrichtung gegeneinander gepresst sind und die so ausgebildet sind, dass die Anordnung von der Flüssigkeit durchströmbar ist.

Ein Hauptanwendungsgebiet für eine derartige Elektrodenanordnung besteht in Wassersystemen, in denen Reinwasser oder Reinstwasser insbesondere keimfrei und algenfrei gemacht werden sollen. Das Wassersystem kann dabei aus Rohrleitungen, Auffangbecken, offene Bäder usw. bestehen.

Elektrodenanordnungen der eingangs erwähnten Art werden insbesondere für die Desinfektion von Regenwasser, die Desinfektion von Reinsfinrasserkreisläufen in der Halbleiter- und Pharmaindustrie, die Beseitigung organischer Belastungen in Spülwässern, die Aufbereitung von Wasser für die Lebensmittelindustrie und Kosmetikindustrie sowie zum Einsatz in allen Arten von industriellen Kühlwasserkreisläufen verwendet, um Algenwachstum oder Wachstum von Bakterien zu verhindern oder bei hohen Kontaminationen einen Abbau zu erreichen.

Mittels einer solchen Elektrodenanordnung können Oxidationsmittel erzeugt werden, die Keime oxidieren und damit abtöten oder inaktivieren.

Die elektrochemische Erzeugung von Oxidationsmitteln hat den Vorteil, dass eine Anpassung an den jeweiligen Anwendungsfall prinzipiell möglich ist. So ergibt sich ein hoher Bedarf an Oxidationsmitteln, wenn ein Wassersystem bereits veralgt oder biologisch befallen ist und gereinigt und desinfiziert werden soll. Ist dieser Vorgang hingegen beendet, kann das Wassersystem dauerhaft in dem desinfizierten und gereinigten Zustand gehalten werden, wozu nur zeitweise und nur ein geringer Bedarf an Oxidationsmitteln erforderlich ist.

Ein variierender Bedarf an Oxidationsmitteln ergibt sich ferner, wenn ein Wassersystem durch einen Unfall mit einem hohen Anfall von organischer Fracht belastet wird. Ähnliches gilt für die Befüllung eines Tanks, bei dem zunächst eine hohe Oxidationsmittelproduktion erforderlich ist, um die Anfangsdesinfektion zu bewerkstelligen, während anschließend nur noch geringere Mengen an Oxidationsmittel ausreichen, um den desinfizierten Zustand aufrecht zu erhalten.

Grundsätzlich sind elektrochemische Verfahren geeignet, die unterschiedlichen Anforderungen an die Produktion von Oxidationsmitteln zu erfüllen. Da die Oxidationsmittelproduktion durch die Zuführung von Strom gesteuert werden kann.

Für die Behandlung von Flüssigkeiten mit einer geringen Leitfähigkeit, beispielsweise Reinstwasser, ist es erforderlich, aufgrund des hohen Widerstands des Wassers hohe Spannungen einsetzen zu müssen, um die benötigten Stromdichten für die Produktion der Oxidationsmittel zu erzeugen. Eine Teillösung dieses Problems gelingt durch die Verwendung von polymeren Festelektrolyten, die, vorzugsweise in Form einer Membran mit einer Stärke von einigen Zehntel Millimetern bis zu einigen Millimetern, den Abstand zwischen den Elektroden aufgrund ihrer Ionenleitfähigkeit überbrücken und als Zwischenlage zwischen den Elektroden zur Vermeidung eines Kurzschlusses geeignet sind. Aufgrund der relativ guten Ionenleitfähigkeit des polymeren Festelektrolyten wird das elektrische Potential der einen Elektrode sehr nahe an die andere Elektrode herangeführt, wobei sich zwischen der Oberfläche des polymeren Festelektrolyten und der unmittelbar benachbarten Elektrode ein Wasserfilm befindet, der somit hohen Stromdichten ausgesetzt ist.

Die Realisierung derartiger Elektrodenanordnungen ist seit Jahrzehnten in prinzipiell gleicher Weise mit dem Aufbau einer "Fischer-Zelle" realisiert worden. Die flächig ausgebildeten Elektroden werden dabei mit einer durch ein umgebendes Gehäuse gebildeten Andruckeinrichtung flächig gegen die zwischen den Elektroden befindliche Membran aus einem polymeren Festelektrolyten gepresst. Die Herstellung eines ausreichenden Anpressdrucks erfolgt mit einer Verschraubung von flächigen Anpressplatten des Gehäuses, die mit einem Mindest-Drehmoment erfolgen muss.

Der Aufbau einer derartigen Zelle ist aufgrund der benötigten hohen Stabilität der Anpressplatten des Gehäuses hoch und bedingt eine umständliche Handhabung. Darüber hinaus ist eine Anpassung an höhere Durchsatzmengen problematisch, da hierfür die wirksame Elektrodenfläche der Zelle vergrößert werden müsste oder der Flüssigkeitsstrom aufgeteilt durch mehrere Zellen geleitet werden müsste.

Die Fischer-Zellen sind ursprünglich mit Bleioxid-Elektroden aufgebaut worden. Die Verwendung einer Bleioxid-Anode weist dabei den weiteren Nachteil auf, dass sich die Elektrode im Wasser zersetzt, wenn sie nicht auf einem Schutzpotential gehalten wird. Die Verwendung einer Elektrodenanordnung mit einer Bleioxid-Anode ist daher nur im kontinuierlichen Betrieb möglich, sodass die Option entfällt, die entsprechende Zelle nur bei Bedarf einzusetzen.

Es ist beispielsweise durch DE 1 00 25 167 A1 bekannt, eine Elektrode zu verwenden, die von einer Flüssigkeit aufgrund von zahlreichen ausgebildeten nutförmigen Kanälen durchströmbar ist und eine Oberfläche aus einer dotierten Diamantschicht aufweist. Derartige Elektroden sind ebenfalls in einer Zelle angeordnet worden, die nach Art einer Fischer-Zelle aufgebaut war (vgl. DE 295 04 323 U1). Die damit verbundenen Handhabungsnachteile sind von der Fachwelt seit Jahrzehnten als unabänderlich akzeptiert worden.

Durch DE 203 18 754 U1 ist ein elektrochemischer Ozonerzeuger in Form eines kleinen tragbaren Geräts bekannt, der ein rohrförmiges Gehäuse mit einem offenen vorderen Ende aufweist. In dem Gehäuse ist eine sich über den Querschnitt des rohrförmigen Gehäuses erstreckende Kathode befestigt, auf der eine Feststoffelektrolytmembran und eine Anode aufliegen. Die Anode wird mit einem Kontaktstift kontaktiert, der mit dem Plus-Pol einer Batterie in Verbindung steht, die sich ihrerseits am anderen Ende des Gehäuses über eine Druckfeder abstützt. Auch bei diesem Gerät wird die Andruckkraft zwischen den Elektroden über die Abstützung an Gehäuseteilen bewirkt.

Der vorliegenden Erfindung liegt die Aufgabe zugrunde, eine Elektrodenanordnung der eingangs erwähnten Art so auszubilden, dass sie einen effektiven Aufbau einer entsprechenden Elektrolysezelle ermöglicht und trotzdem einfach aufzubauen und handzuhaben ist.

Zur Lösung dieser Aufgabe ist erfindungsgemäß eine Elektrodenanordnung der eingangs erwähnten Art dadurch gekennzeichnet, dass die Andruckeinrichtung durch eine Spanneinrichtung gebildet ist, die sich unmittelbar auf den Elektroden so abstützt, dass eine Andruckkraft durch die Verspannung unmittelbar an den Elektroden selbst ausgeübt wird.

Die erfindungsgemäße Elektrodenanordnung benötigt somit für den Andruck der Elektroden gegen den zwischen den Elektroden eingesetzten polymeren Festelektrolyten keine besondere Gehäuseanordnung mit aufwändigen Andruckplatten, sondem lediglich eine Andruckeinrichtung, die mit den Elektroden unmittelbar verbunden ist und die Andruckkraft aus der eher relativ geringen mechanischen Stabilität der Elektroden bezieht. Der Erfindung liegt die Erkenntnis zugrunde, dass eine effektive Elektrodenanordnung - im Gegensatz zu der seit Jahrzehnten bestehenden Vorstellung der Fachwelt - auch ohne eine sehr hohe Anpresskraft der Elektroden gegen den polymeren Festelektrolyten realisierbar ist. Für geeignete Elektroden ist es ausreichend, wenn nur eine gewisse, relativ niedrige Andruckkraft der Elektroden auf den polymeren Festelektrolyten ausgeübt wird, sodass die entsprechende Andruckkraft nicht aufwändig mit speziell konstruierten Gehäuseteilen erzeugt werden muss, sondern in einfacher Weise unmittelbar an den Elektroden selbst ausgeübt werden kann.

So ist es beispielsweise möglich, als Trägermaterial einer Elektrode ein Streckmetallgitter zu verwenden, das beispielsweise mit einer dotierten Diamantschicht beschichtet ist. Durch die Gitteröffnungen des Streckmetallgitters kann eine Kunststoffschraube hindurchgesteckt werden, bis der Kopf der Kunststoffschraube an der Elektrode anliegt. Die Verspannung der beiden Elektroden in Richtung auf den polymeren Festelektrolyten kann dann durch Aufschrauben einer Mutter auf den Schraubenbolzen erfolgen, der durch die beiden Elektroden und den dazwischen liegenden Festelektrolyten hindurch ragt.

Dabei kann eine intensive Durchströmung der Elektrodenanordnung dadurch sichergestellt werden, dass auch der vorzugsweise in Form einer Membran ausgebildete polymere Festelektrolyt Durchströmungsöffnungen aufweist. Möglich ist ferner, die Durchströmung des Zwischenraumes zwischen den Elektroden dadurch zu gewährleisten, dass der polymere Festelektrolyt in voneinander beabstandeten Streifen in dem Zwischenraum zwischen den Elektroden angeordnet ist. In einer Weiterbildung dieses Gedankens kann der polymere Festelektrolyt auch in allseitig voneinander beabstandeten Flächenstücken in dem Zwischenraum angeordnet sein, sodass eine Durchströmbarkeit des Zwischenraums in unterschiedlichen Richtungen gewährleistet ist.

Der polymere Festelektrolyt kann in Form einer Membran zwischen den Elektroden eingelegt sein. Insbesondere bei der Ausbildung in Form von allseitig voneinander beabstandeten Flächenstücken wird es jedoch zweckmäßig sein, wenn der polymere Festelektrolyt auf eine der Elektroden als Oberflächenschicht aufgebracht ist.

Da die erfindungsgemäße Elektrodenanordnung keine aufwändige Anpressdruckerzeugung benötigt, ist es ohne weiteres möglich, mit der Elektrodenanordnung einen Stapel aufzubauen, der eine wirksame Elektrolyseeinrichtung auch für höhere Durchflussraten ermöglicht. Da sich die Andruckeinrichtung an den Elektroden selbst abstützt, ist es ohne weiteres möglich, zahlreiche Elektroden mit einem zwischen ihnen angeordneten polymeren Festelektrolyt zu einem Stapel anzuordnen. Dabei ist es besonders zweckmäßig, wenn die Elektroden mit Hilfe über ihre gemeinsame Fläche hinausragenden Kontaktfahnen zur elektrischen Kontaktierung versehen sind. Dabei können die Kontaktfahnen der Anoden in dem Stapel einerseits und der Katoden in dem Stapel andererseits miteinander fluchtend ausgebildet sein, um eine gemeinsame Kontaktierung, beispielsweise durch eine durch Öffnungen der Kontaktfahnen hindurchgesteckten Kontaktstab, zu vereinfachen.

Die erfindungsgemäße Elektrodenanordnung erlaubt in überraschend einfacher Weise auch die Abkehr von den bisher üblichen flächigen Elektroden. So ist es beispielsweise möglich, zwei Elektroden stabförmig auszubilden und den polymeren Festelektrolyten zwischen den Elektroden dadurch zu realisieren, dass der Festelektrolyt in Form eines Streifens unter Vorspannung abwechselnd die Elektroden umschlingt. Der Streifen kann dabei um die beiden Elektroden jeweils in Form einer Acht umschlingend angebracht werden, wobei die Umschlingung mit einer gewissen Vorspannung erfolgt, um den innigen Kontakt zu gewährleisten. Das Andrücken der beiden Elektroden gegen die zwischen den Elektroden befindlichen Streifenabschnitte des polymeren Festelektrolyten kann beispielsweise durch ein um die Elektroden geschlungenes drahtförmiges Material mit zur Erzeugung des Andrucks miteinander verdrillten Enden erfolgen. Das drahtförmige Material kann dabei vorzugsweise ein isolierendes Material sein oder über eine isolierende Schicht an den Elektroden anliegen.

Die Erfindung soll im Folgenden anhand von in der Zeichnung dargestellten Ausführungsbeispielen näher erläutert werden. Es zeigen:
- Figur 1 -: eine schematische Darstellung zweier Elektroden und einer dazwischen angeordneten Membran aus einem Festelektrolyten
- Figur 2 -: einen mit der Anordnung gemäß Figur 1 gebildeten Stapel
- Figur 3 -: eine perspektivische Darstellung des Stapels gemäß Figur 2
- Figur 4 -: eine weitere Ausführungsform zweier Elektroden mit einem Festelektrolyten in Form von parallel zueinander angeordneten Steifen
- Figur 5 -: eine Draufsicht auf einen mit der Anordnung gemäß Figur gebildeten Stapel, in dem jede Elektrode kontaktiert ist
- Figur 6 -: einen mit der Anordnung gemäß Figur 4 gebildeten Stapel mit einer Kontaktierung nur der äußeren Elektroden
- Figur 7 -: eine Variante der Anordnung gemäß Figur 4, bei der die Elektrodenplatten mit schlitzförmigen Durchlassöffnungen versehen sind
- Figur 8 -: einen mit der Anordnung gemäß Figur 7 gebildeten Stapel
- Figur 9 -: eine Anordnung aus zwei Elektroden, von denen die eine auf ihrer zur anderen Elektrode zeigenden Oberfläche mit aufgebrachten Flächenabschnitten des polymeren Festelektrolyten beschichtet ist.
- Figur 10 -: einen mit der Anordnung gemäß Figur 9 gebildeten Stapel
- Figur 11 -: eine perspektivische Darstellung ähnlich der Figur 3 mit Kontaktfahnen an den unterschiedlich gepolten Elektroden
- Figur 12 -: eine schematische Darstellung einer mit einem Elektrodenstapel beschickten Behandlungszelle
- Figur 13 -: eine Ansicht einer Elektrodenanordnung mit zwei stabförmigen Elektroden.

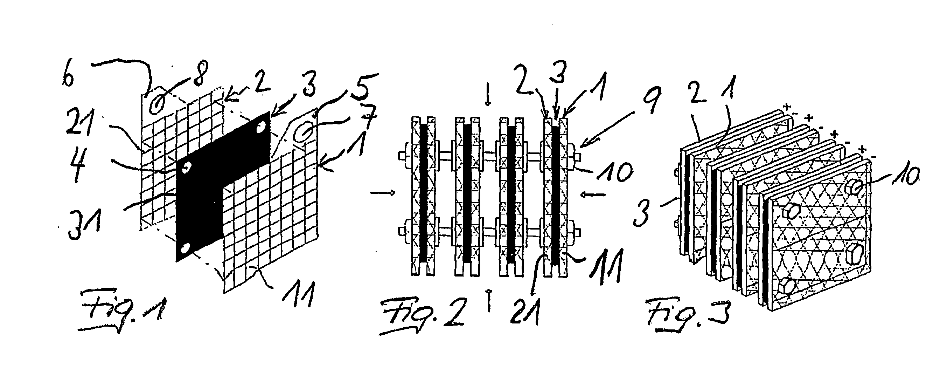

Figur 1 zeigt zwei Elektroden 1, 2 in Form von Streckmetallgittern 11, 21. Eine erste Elektrode 1 dient als Katode, während die zweite Elektrode 2 als Anode fungiert. Beide Elektroden 1, 2 sind flächig mit einem rechteckigen Querschnitt ausgebildet und weisen die gleiche Flächenform auf. Zwischen den beiden Elektroden 1, 2 befindet sich ein polymerer Festelektrolyt 3 in Form einer Membran 31, deren Fläche der Fläche der Elektroden 1, 2 entspricht. Die Membran 31 ist in ihren vier Eckbereichen mit jeweils einer Durchgangsöffnung 4 versehen. Die Membran weist beispielsweise eine Stärke zwischen 0,4 und 0,8 mm auf.

Die Elektroden 1, 2 sind außerhalb der rechteckigen Fläche der Streckmetallgitter 11, 21 mit jeweils einer aus der Fläche herausragenden Kontaktfahne 5, 6 versehen. Beide Kontaktfahnen weisen eine Durchgangsöffnung 7, 8 auf.

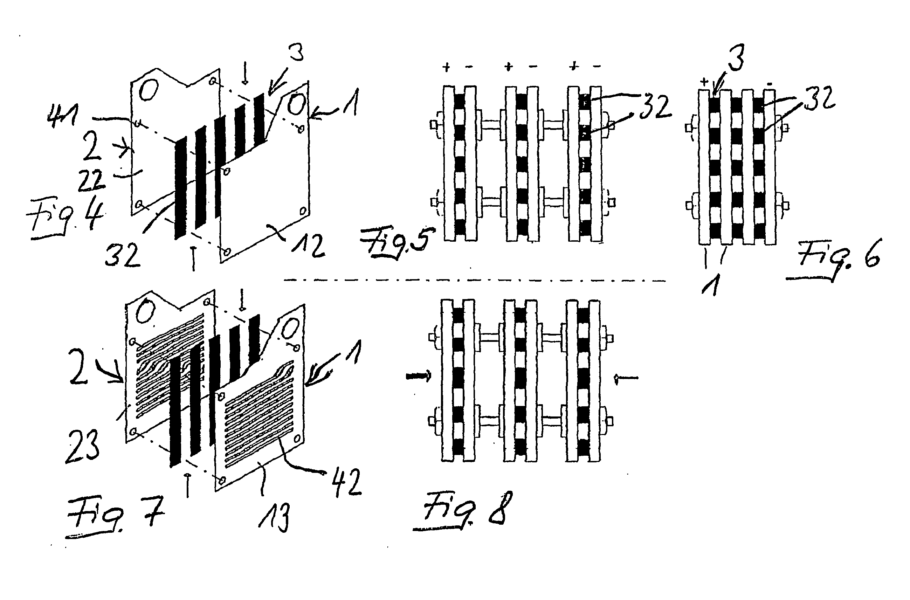

Figur 2 verdeutlicht, dass die aus den Streckmetallgittern 11, 21 gebildeten Elektroden 1, 2 mit jeweils einem dazwischen liegenden Festelektrolyten 3 mittels einer Spanneinrichtung 9 gegeneinander gedrückt werden, wobei die Spanneinrichtung 9 sich über vier zu einem Stapel zusammengefügte Elektrodenanordnungen 1, 2, 3 erstreckt. Die Verspannung erfolgt mittels Muttern 10, die auf dem Gewindebolzen 9 gegen die Elektroden 1, 2 spannbar sind.

Gemäß Figur 1 sind vier Gewindebolzen 9 vorgesehen, die durch Zwischenräume der Streckmetallgitter 11, 21 und durch die Durchgangsöffnungen 4 des polymeren Festelektrolyten 3 hindurchgesteckt sind.

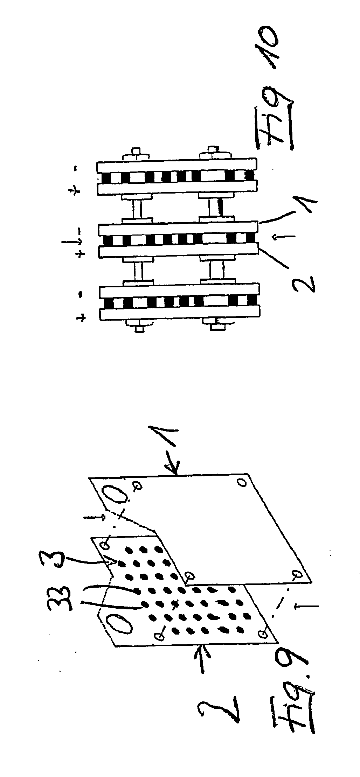

Figur 3 verdeutlicht in einer perspektivischen Darstellung, dass die Elektroden 1, 2 jeweils an unterschiedliche Pole der Versorgungsspannungen angeschlossen werden. Die Elektroden 1, 2 sind bei dem in den Figuren 1 bis 3 dargestellten Ausführungsbeispiel mit einem Träger in Form eines Streckmetallgitters 11, 21 gebildet und mit einer dotierten Diamantschicht beschichtet. Es ist auch möglich, an die Elektroden 1, 2 unterschiedlich große Versorgungsspannungen anzulegen.

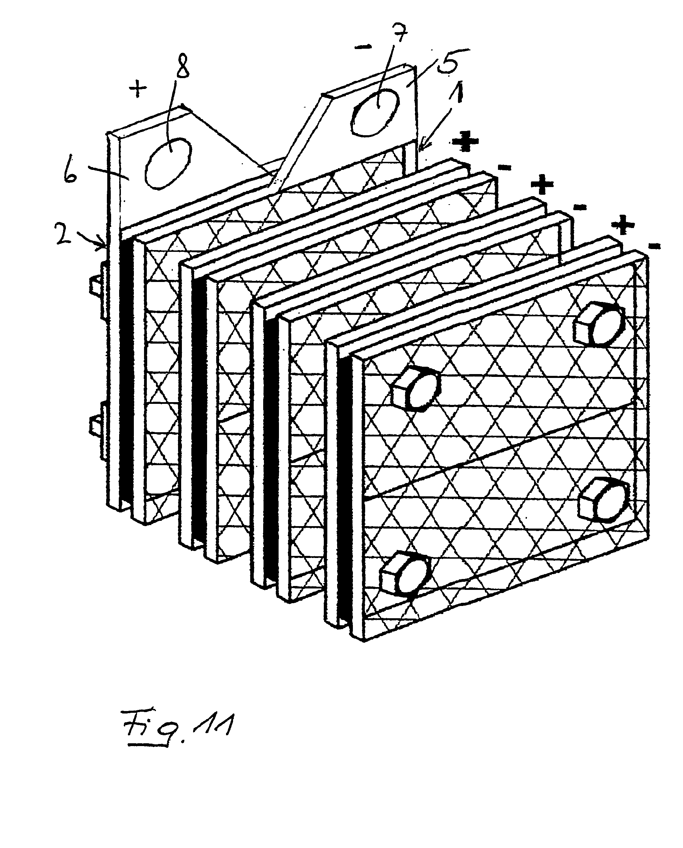

Figur 4 zeigt ein modifiziertes Ausführungsbeispiel, bei dem die Elektroden 1, 2 mit Metallplatten 12, 22 gebildet sind, die mit einer dotierten Diamantschicht beschichtet sind. Die Elektroden weisen Durchgangsöffnungen 41 in ihren Eckbereichen auf, durch die Gewindebolzen 9 in der anhand der Figuren 2 und 3 beschriebenen Weise hindurchsteckbar sind.

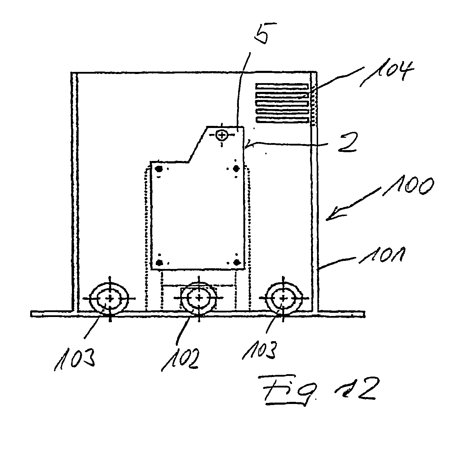

Der polymere Elektrolyt 3 ist in diesem Ausführungsbeispiel durch vertikal stehende, parallel mit Abstand zueinander angeordnete Streifen 32 gebildet. Die Draufsicht der Figur 5 verdeutlicht, dass die Elektrodenanordnungen in dem gebildeten Stapel senkrecht zur Zeichenebene aufgrund der Streifen 32 durchströmbar sind.

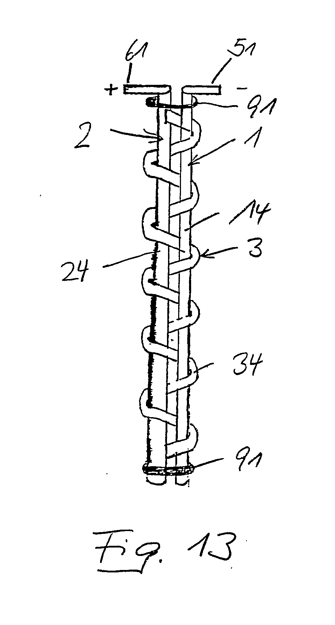

Die in Figur 6 dargestellte Stapelanordnung besteht aus vier gleichen Elektroden 1, die durch jeweils einen Festelektrolyten 3, hier in Form der Streifen 32 voneinander getrennt sind. Die Kontaktierung erfolgt hierbei mit unterschiedlichen Polaritäten lediglich an den beiden äußeren Elektroden 1, wodurch die mittleren Elektroden entsprechend abgestufte Potentiale einnehmen. Eine derartige Anordnung, bei der die mittleren Elektroden sowohl als Anode (zu der einen Seite) als auch als Katode wirken, wird auch als bipolare Anordnung bezeichnet.

Das in Figur 7 dargestellte Ausführungsbeispiel unterscheidet sich von dem Ausführungsbeispiel gemäß Figur 4 nur dadurch, dass als Träger der Elektroden 1, 2 mit metallische Platten 13, 23 verwendet sind, die mit horizontalen schlitzförmigen Durchgangsöffnungen 42 versehen sind, die ein Durchströmen der Elektroden 1, 2 ermöglichen. Demgemäß zeigen die Pfeile in Figur 8, dass neben der vertikalen Durchströmung (senkrecht zur Zeichenebene) eine Durchströmung der Elektrodenanordnungen in Stapelrichtung möglich ist.

Bei dem in Figur 9 dargestellten Ausführungsbeispiel ist der polymere Festelektrolyt 3 in Form von kreisrunden Flächenabschnitten 33 auf die Oberfläche der zweiten Elektrode 2 aufgebracht, die zur ersten Elektrode 1 zeigt. Der polymere Elektrolyt 3 ist somit unmittelbar auf die Elektrode 2 auflaminiert. Die Draufsicht einer mehrfachen Elektrodenanordnung in Figur 10 zeigt, dass der Zwischenraum zwischen den Elektroden 1, 2 horizontal und vertikal durchströmbar ist, da die Flächenabschnitte 33 allseitig voneinander beabstandet sind, wodurch sich Durchströmbereiche in den Abständen ergeben.

Figur 11 verdeutlicht in einer vergrößerten schematischen Darstellung die Kontaktierung der Elektroden 1, 2 mit Hilfe der Kontaktfahnen 5, 6 und der darin befindlichen Durchgangsöffnungen 7, 8. Die Kontaktfahnen 5, 6 der jeweils gleichgepolten Elektroden 1, 2, sind miteinander fluchtend ausgerichtet (in Figur 11 sind Kontaktfahnen 5, 6 nur für die beiden hinteren Elektroden 1, 2 des Stapels eingezeichnet). Die Kontaktfahnen 5 der ersten Elektroden 1 sind durch einen durch die miteinander fluchtenden Durchgangsöffnungen 7 hindurchgesteckten (nicht dargestellten) Kontaktbolzen miteinander kontaktierbar und daher gemeinsam mit einem Pol der Versorgungsspannung verbindbar. In gleicher Weise erfolgt die Kontaktierung der anderen Elektroden 2 über die Kontaktfahnen 6 und die darin befindlichen, miteinander fluchtenden Durchgangsöffnungen 8.

Figur 12 verdeutlicht den Aufbau einer Behandlungszelle 100, wobei der Übersichtlichkeit halber nur die An oden 2 der Elektrodenanordnungen dargestellt sind, die über ihre miteinander fluchtenden Kontaktfahnen 5 kontaktiert sind. Die Zelle 100 weist ein Gehäuse 101 auf, das eine Einlassöffnung 102 für das zu reinigende Wasser aufweist. Das zu reinigende Wasser strömt in dem Gehäuse 101 von unten nach oben in den Bereich der Elektroden 2 hinein und tritt aus dem Bereich der Elektroden 2 seitlich aus, um über die Auslassöffnungen 103 das Gehäuse 101 in gereinigter Form zu verlassen. Im oberen Bereich des Gehäuses 101 befinden sich Lüftungsschlitze 104.

Figur 13 zeigt eine andersartige Anordnung der Elektroden 1, 2, die in diesem Ausführungsbeispiel als stabförmige Elektroden 14, 24 ausgebildet sind. Als Abstandshalter zwischen den Elektroden 1, 2 dient der Festelektrolyt 3, der in Form eines langen Streifens 34 mäanderförmig die Form einer "Acht" ausbilden, um die Elektroden 1, 2 mit einer Vorspannung gewickelt ist, sodass der Streifen 34 die Elektroden 1, 2 bereits gegeneinander zieht. Das Andrücken der Elektroden gegeneinander bzw. gegen die zwischen ihnen liegenden Abschnitte des Festelektrolyten 3 erfolgt durch zwei um die Elektroden 1, 2 gelegten Schlingen 91 aus einem drahtförmigen, isolierenden Material, die mittels verdrillter Enden zusammenziehbar sind, um so die Elektroden 1, 2 gegeneinander zu ziehen.

Die Kontaktierung der Elektroden 1, 2 erfolgt an stirnseitigen Enden mit Kontaktstücken 51, 61. Eine derartige Ausbildung der Elektrodenanordnung ist besonders für eine Wasserreinigung in Rohrsystemen geeignet.

## Patentansprüche

1. Elektrodenanordnung für eine elektrochemische Behandlung von Flüssigkeiten mit einer geringen Leitfähigkeit, mit Elektroden (1, 2), zwischen denen ein polymerer Festelektrolyt (3) angeordnet ist, die mittels einer Andruckeinrichtung (9, 10; 91) gegeneinander gepresst sind und die so ausgebildet sind, dass die Anordnung von der Flüssigkeit durchströmbar ist, **dadurch gekennzeichnet, dass** die Andruckeinrichtung (9, 10, 91) durch eine Spanneinrichtung gebildet ist, die sich unmittelbar auf den Elektroden (1, 2) so abstützt, dass eine Andruckkraft durch die Verspannung unmittelbar an den Elektroden (1, 2) selbst ausgeübt wird.

2. Elektrodenanordnung nach Anspruch 1, **dadurch gekennzeichnet, dass** wenigstens eine Elektrode (1, 2) einen mit einer dotierten Diamantschicht beschichteten Träger aufweist.

3. Elektrodenanordnung nach Anspruch 2, **dadurch gekennzeichnet, dass** der Träger aus Metall besteht.

4. Elektrodenanordnung nach Anspruch 3, **dadurch gekennzeichnet, dass** der Träger durch ein Streckmetallgitter (11, 21) gebildet ist.

5. Elektrodenanordnung nach Anspruch 2 oder 3, **dadurch gekennzeichnet, dass** die Elektroden (1, 2) Durchgangsöffnungen (42) zum polymeren Festelektrolyten (3) aufweisen.

6. Elektrodenanordnung nach einem der Ansprüche 1 bis 5, **dadurch gekennzeichnet, dass** der Festelektrolyt (3) Durchgangsöffnungen aufweist.

7. Elektrodenanordnung nach einem der Ansprüche 1 bis 6, **dadurch gekennzeichnet, dass** der polymere Festelektrolyt (3) den Zwischenraum zwischen den Elektroden (1, 2) nur teilweise ausfüllt.

8. Elektrodenanordnung nach Anspruch 7, **dadurch gekennzeichnet, dass** der polymere Festelektrolyt (3) in voneinander beabstandeten Streifen in dem Zwischenraum zwischen den Elektroden (1, 2) angeordnet ist.

9. Elektrodenanordnung nach einem der Ansprüche 1 bis 7, **dadurch gekennzeichnet, dass** der polymere Festelektrolyt (3) in allseitig voneinander beabstandeten Flächenstücken (33) in dem Zwischenraum zwischen den Elektroden (1, 2) angeordnet ist.

10. Elektrodenanordnung nach einem der Ansprüche 1 bis 9, **dadurch gekennzeichnet, dass** der polymere Festelektrolyt (3) auf einer der Elektroden (2) als Oberflächenschicht aufgebracht ist.

11. Elektrodenanordnung nach einem der Ansprüche 1 bis 10, **dadurch gekennzeichnet, dass** sie aus einem Stapel aus mehreren Elektroden (1, 2) und mehreren zwischen jeweils zwei Elektroden (1, 2) angeordneten polymeren Festelektrolyten (3) gebildet ist, die gemeinsam durch die Andruckeinrichtung (9, 10) gegeneinander gedrückt sind.

12. Elektrodenanordnung nach einem der Ansprüche 1 bis 10, **dadurch gekennzeichnet, dass** mehrere aus jeweils zwei Elektroden (1, 2) und einem polymeren Festelektrolyten (3) gebildete Einzelanordnungen mit der Andruckeinrichtung (9, 10) zu einem Stape I verbunden sind.

13. Elektrodenanordnung nach einem der Ansprüche 1 bis 12, **dadurch gekennzeichnet, dass** die Elektroden (1, 2) flächig ausgebildet sind.

14. Elektrodenanordnung nach einem der Ansprüche 1 bis 13, **dadurch gekennzeichnet, dass** die Andruckeinrichtung (9, 10) aus mehreren, durch die Elektroden hindurchgeführten Verschraubungen aus isolierendem Material bestehen.

15. Elektrodenanordnung nach einem der Ansprüche 1 bis 13, **dadurch gekennzeichnet, dass** die Andruckeinrichtung (91) durch um die Elektroden (1, 2) geschlungenes drahtförmiges Material mit zur Erzeugung des Andrucks miteinander verdrillten Enden gebildet ist.

16. Elektrodenanordnung nach einem der Ansprüche 1 bis 12 und 15, **dadurch gekennzeichnet, dass** zwei Elektroden (1, 2) stabförmig ausgebildet sind und dass der polymere Festelektrolyt (3) in Form eines Streifens (34) unter Vorspannung abwechselnd die Elektroden (1, 2) umschlingt.

## Claims

1. An electrode assembly for the electrochemical treatment of liquids with a low conductivity, said assembly having electrodes (1, 2) which have a polymeric solid electrolyte (3) arranged between them, are pressed against one another by means of a pressure-exerting device (9, 10; 91) and are formed in such a manner that the liquid can flow through the assembly, **characterized in that** the pressure-exerting device (19; 91) is a clamping device which is supported on the electrodes (1, 2) so that the contact-pressure force is exerted by means of the clamping directly at the electrodes (1, 2) themselves.

2. The electrode assembly as claimed in claim 1, **characterized in that** at least one electrode (1, 2) has a support which is coated with a doped diamond layer.

3. The electrode assembly as claimed in claim 2, **characterized in that** the support comprises metal.

4. The electrode assembly as claimed in claim 3, **characterized in that** the support is formed from an expanded metal grid (11, 21).

5. The electrode assembly as claimed in claim 2 or 3, **characterized in that** the electrodes (1, 2) have passage openings (42) to the polymeric solid electrolyte (3).

6. The electrode assembly as claimed in one of claims 1 to 5, **characterized in that** the solid electrolyte (3) has passage openings.

7. The electrode assembly as claimed in one of claims 1 to 6, **characterized in that** the polymeric solid electrolyte (3) only partially fills the interspace between the electrodes {1, 2).

8. The electrode assembly as claimed in claim 7,**characterized in that** the polymeric solid electrolyte (3) is arranged in strips, which are at a distance from another, in the interspace between the electrodes (1, 2).

9. The electrode assembly as claimed in one of claims 1 to 7, **characterized in that** the polymeric solid electrolyte (3) is arranged in area pieces (33), which are at a distance from one another on all sides, in the interspace between the electrodes (1,2)

10. The electrode assembly as claimed in one of claims 1 to 9, **characterized in that** the polymeric solid electrolyte (3) is applied to one of the electrodes (2) as a surface layer.

11. The electrode assembly as claimed in one of claims 1 to 10, **characterized in that** it is formed from a stack of a plurality of electrodes (1, 2) and a plurality of polymeric solid electrolytes (3) which are arranged between two respective electrodes (1,2), said electrodes and electrolytes being jointly pressed against one another by the pressure-exerting device (9, 10).

12. The electrode assembly as claimed in one of claims 1 to 10,
**characterized in that** a plurality of individual assemblies which are formed from two respective electrodes (1, 2) and one polymeric solid electrolyte (3) are connected to the pressure-exerting device (9, 10) to form a stack.

13. The electrode assembly as claimed in one of claims1 to 12,
**characterized in that** the electrodes (1, 2) are flat.

14. The electrode assembly as claimed in one of claims 1 to 13, **characterized in that** the pressure-exerting device (9, 10) comprises a plurality of screw connections which are led through the electrodes and are made of insulating material.

15. The electrode assembly as claimed in one of claims 1 to 13, **characterized in that** the pressure-exerting device (91) is formed from material which is in the form of a wire, is wrapped around the electrodes (1, 2) and has ends which are twisted together in order to generate the pressure.

16. The electrode assembly as claimed in one of claims 1 to 12 and 15, **characterized in that** two electrodes (1, 2) are in the form of rods, and **in that** the polymeric solid electrolyte (3) in the form of a strip (34) alternately wraps around the electrodes (1, 2) under prestress.

## Revendications

1. Système d'électrodes pour un traitement électrochimique de liquides ayant une faible conductivité, comprenant des électrodes (1, 2) entre lesquelles est situé un électrolyte solide en polymère (3), qui sont pressées l'une contre l'autre au moyen d'un dispositif presseur (9, 10 ; 91), et qui sont réalisées de telle sorte que le système permet la circulation du liquide au travers de lui, **caractérisé en ce que** le dispositif presseur (9, 10; 91) est constitué par un dispositif de serrage qui s'appuie directement sur les électrodes (1, 2) de telle sorte qu'une force d'appui engendrée par le serrage est exercée directement sur les électrodes (1, 2) elles-mêmes.

2. Système d'électrodes selon la revendication 1, **caractérisé en ce qu'**au moins l'une des électrodes (1, 2) présente un support revêtu par une couche de diamant dopée.

3. Système d'électrodes selon la revendication 2, **caractérisé en ce que** le support est constitué de métal.

4. Système d'électrodes selon la revendication 3, **caractérisé en ce que** le support est réalisé par un métal déployé (11, 21).

5. Système d'électrodes selon la revendication 2 ou 3, **caractérisé en ce que** les électrodes (1, 2) présentent des ouvertures de passage (42) pour l'électrolyte solide en polymère (3).

6. Système d'électrodes selon l'une des revendications 1 à 5, **caractérisé en ce que** l'électrolyte solide (3) présente des ouvertures de passage.

7. Système d'électrodes selon l'une des revendications 1 à 6, **caractérisé en ce que** l'électrolyte solide en polymère (3) ne remplit que partiellement l'espace compris entre les électrodes (1, 2).

8. Système d'électrodes selon la revendication 7, **caractérisé en ce que** l'électrolyte solide en polymère (3) est disposé dans l'espace compris entre les électrodes (1, 2) sous forme de bandes séparées.

9. Système d'électrodes selon l'une des revendications 1 à 7, **caractérisé en ce que** l'électrolyte solide en polymère (3) est disposé dans l'espace compris entre les électrodes (1, 2) sous forme de portions planes (33) distantes de tous les côtés les unes par rapport aux autres.

10. Système d'électrodes selon l'une des revendications 1 à 9, **caractérisé en ce que** l'électrolyte solide en polymère (3) est appliqué sur l'une des électrodes (2) en tant que couche de surface supérieure.

11. Système d'électrodes selon l'une des revendications 1 à 10, **caractérisé en ce qu'**il est constitué par un empilement de plusieurs électrodes (1, 2) et de plusieurs électrolytes solides en polymère (3) disposés entre chaque paire d'électrodes (1, 2), qui sont pressées les unes contre les autres ensembles par le dispositif presseur (9, 10).

12. Système d'électrodes selon l'une des revendications 1 à 10, **caractérisé en ce que** plusieurs dispositions individuelles constituées chacune par deux électrodes (1, 2), et un électrolyte solide en polymère (3) sont reliées ensemble par le dispositif presseur (9, 10) sous forme d'une pile.

13. Système d'électrodes selon l'une des revendications 1 à 12, **caractérisé en ce que** les électrodes (1, 2) sont réalisées de façon plane.

14. Système d'électrodes selon l'une des revendications 1 à 13, **caractérisé en ce que** le dispositif presseur (9, 10) est constitué par plusieurs vis en matière isolante traversant les électrodes.

15. Système d'électrodes selon l'une des revendications 1 à 13, **caractérisé en ce que** le dispositif presseur (91) est constitué par un matériau en forme de fil enroulé autour des électrodes (1, 2) dont les extrémités sont torsadées ensemble pour obtenir le pressage.

16. Système d'électrodes selon l'une des revendications 1 à 12, **caractérisé en ce que** deux électrodes (1, 2) sont réalisées sous forme de barreaux et que l'électrolyte solide en polymère (3) est réalisé sous forme de bande (34) enroulée alternativement autour des électrodes (1, 2).
